# EUROPEAN PATENT SPECIFICATION

(11) **EP 1 946 453 B1**
(45) Date of publication and mention of the grant of the patent: **14.09.2016**
(21) Application number: 06846115.1
(22) Date of filing: 19.10.2006
(51) Int. Cl.: H04B 1/40

(54) **DIVERSITY RECEIVER FOR WIRELESS COMMUNICATION**
DIVERSITÄTSEMPFÄNGER ZUR DRAHTLOSEN KOMMUNIKATION
RECEPTEUR EN DIVERSITE POUR COMMUNICATION SANS FIL

(30) Priority: 19.10.2005 US 728079 P; 11.10.2006 US 548569
(43) Date of publication of application: 23.07.2008
(60) Divisional application: 10007688.4
(73) Proprietor: Qualcomm Incorporated, San Diego, CA 92121 (US)
(72) Inventor: SAMPSON, Wesley, La Jolla, California 92037 (US); HADJICHRISTOS, Aristotele, Cary, North Carolina 27519 (US); SAHOTA, Gurkanwal S., San Diego, California 92103 (US)
(74) Representative: Carstens, Dirk Wilhelm
(86) International application number: PCT/US2006/060082
(87) International publication number: WO 2007/048113

(56) References cited:
- EP-A1- 1 164 719
- EP-A1- 1 398 887
- WO-A-2005/039060
- WO-A-2005/064816
- US-A1- 2005 227 631

## Description

### BACKGROUND

### I. Related Application

This application claims the benefit of provisional U.S. Application Serial No. 60/728,079, entitled "A COMBINED ARHTECTURE FOR UMTS AND GSM/EDGE DRIVERS RECEPTION," filed October 19, 2005, assigned to the assignee of the present application.

### II. Field

The present disclosure relates generally to electronics, and more specifically to a diversity receiver for wireless communication.

### III. Background

In a wireless communication system, a transmitter modulates data onto a radio frequency (RF) carrier signal to generate an RF modulated signal that is more suitable for transmission. The transmitter then transmits the RF modulated signal via a wireless channel to a receiver. The transmitted signal may reach the receiver via one or more propagation paths, e.g., line-of-sight and/or reflected paths. The characteristics of the propagation paths may vary over time due to various phenomena such as fading and multipath. Consequently, the transmitted signal may experience different channel conditions and may be received with different amplitudes and/or phases over time.

The receiver processes the received RF signal and attempts to recover the data sent by the transmitter. The performance of the receiver is dependent on the received signal qualify, which may fluctuate widely due to fading and multipath. Hence, performance may suffer whenever the receiver experiences deleterious path effects. This degradation in performance is undesirable.

There is therefore a need in the art for a receiver that can achieve good performance in the presence of deleterious path effects.

Attention is drawn to the document EP-A1-1 398 887 which relates to a signal which is received by a first and a second antenna, wherein the antennas are being tuned around a first and a second frequency band, respectively. The signal from the first antenna is handled in a first receiver system optimised for receiving the first frequency band, and the signal from the second antenna is fed into a second receiver system optimised for receiving the second frequency band. A local oscillator is used for producing an inter-frequency signal centred in the frequency of the channel of the first band. The obtained inter-frequency signal is fed to a compensation filter adapted to equalise the signal coming from the second receiver system with respect to distortions caused to the second signal by the second receive path. The signals from the first receiver system and the compensation filter are combined, thus forming a combined signal, preferably using a diversity combiner.

Further attention is drawn to the document WO 2005/039060 A which relates to a receive front-end module in a multi-band communication device. The communication device comprises a plurality of signal paths for receiving and transmitting communication signals in a plurality of frequency bands in GSM and W-CDMA modes. The signal paths in the receive front-end module are operatively connected to a common feed point, which is connected to one of the RF antennas of the communication device, and the signal paths are selected such that no frequency bands for receiving communication signals in the receive front-end module are overlapping. If the communication device also transmits the communication signal in at least one transmit frequency range partially overlapping with one of the frequency bands in the receive front-end module, switching means is provided to at least one of signal paths in the receive front-end module for providing cross-band isolation between the transmitted and received communication signals.

Document US 2005/227631 A1 relates to a transceiver system including a first section coupled to a first antenna, a second section coupled to a second antenna, and a radio frequency (RF) unit. The first section includes a transmit path and a first receive path for a first (e.g., GSM) wireless system, a transmit path and a first receive path for a second (e.g., CDMA) wireless system, and a transmit/receive switch that couples the signal paths to the first antenna. The second section includes a second receive path for the first wireless system and a second receive path for the second wireless system. The first and second receive paths for the first wireless system are for two frequency bands. The first and second receive paths for the second wireless system are for a single frequency band and provide receive diversity. The transceiver system may include a GPS receive path coupled to a third antenna.

Moreover, document WO 2005/064816 A relates to a low-power diversity receiver including at least two receive paths, each of which is designated as a primary or secondary receive path. A primary receive path is compliant with system requirements (e.g., IS-98D requirements). A secondary receive path is not fully compliant with the system requirements and is designed for lower power, less area, and lower cost than the primary receive path. For a multi-antenna receiver, the two receive paths may be used to simultaneously process two received signals from two antennas. For a single-antenna receiver, either the primary or secondary receive path is selected, e.g., depending on whether or not large amplitude "jammers" are detected, to process a single input signal from one antenna. The receiver may include additional receive paths for additional frequency bands and/or GPS.

Attention is also drawn to the document EP-A1-1 164 719 which relates to a dual mode portable telephone according to the present invention is a portable telephone of a diversity type that can be used in both of the W-CDMA system and the PDC system and which includes: a transmit/receive antenna; a receive antenna; a transmit circuit and receive circuit of the W-CDMA system; a transmit circuit and receive circuit of the PDC system; switches for selectively coupling the antennas with the W-CDMA circuits or the PDC circuits; and a band branching filter.

### SUMMARY

In accordance with the present invention, an apparatus, as set forth in claim 1, and a method, as set forth in claim 7, is provided. Further embodiments are claimed in the dependent claims.

A diversity receiver capable of receiving a Code Division Multiple Access (CDMA) system and a Time Division Multiple Access (TDMA) system, with receive diversity for at least one system, is described wherein. Receive diversity refers to reception of a transmission with multiple antennas to provide diversity against deleterious path effects. The TDMA system may be a Global System for Mobile Communications (GSM) system or some other TDMA system. The CDMA system may be a Wideband-CDMA (W-CDMA) system, a cdma2000 system, or some other CDMA system. W-CDMA is used in and is also often referred to as Universal Mobile Telecommunications System (UMTS).

In an embodiment, the diversity receiver includes a first receiver for GSM and a second receiver for UMTS. The first receiver may be implemented with a first receiver design, may be spec-compliant for GSM and may also support UMTS. The second receiver may be implemented with a second receiver design, may be speccompliant for UMTS, and may also support GSM. The first receiver may include a lowpass filter having an adjustable bandwidth that may be set for either GSM or UMTS. The second receiver may include a bandpass filter used to attenuate a transmit frequency range for UMTS. Each receiver may include circuit blocks that are used for both GSM and UMTS, which may reduce complexity, cost and circuit area.

In an embodiment, a switch and filter unit couples the first receiver to a primary antenna when receiving GSM and couples the second receiver to the primary antenna when receiving UMTS. If the first receiver also supports UMTS, then the switch and filter unit couples the first receiver to a diversity antenna when receiving UMTS. If the second receiver also supports GSM, then the switch and filter unit couples the second receiver to the diversity antenna when receiving GSM. The switch and filter unit may also perform filtering for GSM and UMTS.

Various aspects and embodiments of the invention are described in further detail below.

### BRIEF DESCRIPTION OF THE DRAWINGS

FIG. 1 shows a PLMN that includes a GSM network and a UMTS network.
FIG. 2 shows a terminal capable of receiving UMTS with diversity and GSM.
FIG. 3 shows a terminal capable of receiving GSM with diversity and UMTS.
FIG. 4 shows a terminal capable of receiving GSM and UMTS with diversity.
FIG. 5 shows a receiver for GSM and possibly supporting UMTS.
FIG. 6 shows a receiver for UMTS and possibly supporting GSM.
FIGS. 7A and 7B show two units that perform filtering and RF switching.
FIGS. 8A and 8B show two units that perform filtering and RF switching for multiple frequency bands.
FIG. 9 shows a process to receive GSM and UMTS.

### DETAILED DESCRIPTION

The diversity receiver described herein may be used for various wireless communication systems such as CDMA systems, TDMA systems, Frequency Division Multiple Access (FDMA) systems, Orthogonal FDMA (OFDMA) systems, and so on. A CDMA system may implement a radio technology such as W-CDMA, cdma2000, and so on. cdma2000 covers IS-2000, IS-856, and IS-95 standards. IS-2000 and IS-95 are often referred to as CDMA2000 1x, or simply "1x". A TDMA system may implement a radio technology such as GSM, Digital Advanced Mobile Phone System (D-AMPS), and so on. D-AMPS covers IS-136 and IS-54. These various radio technologies and standards are known in the art. W-CDMA and GSM are described in documents from a consortium named "3rd Generation Partnership Project" (3GPP). cdma2000 is described in documents from a consortium named "3rd Generation Partnership Project 2" (3GPP2). 3GPP and 3GPP2 documents are publicly available.

In general, the diversity receiver described herein may support any number of radio technologies and any ones of the radio technologies known in the art. For clarity, the diversity receiver is specifically described below for GSM and UMTS.

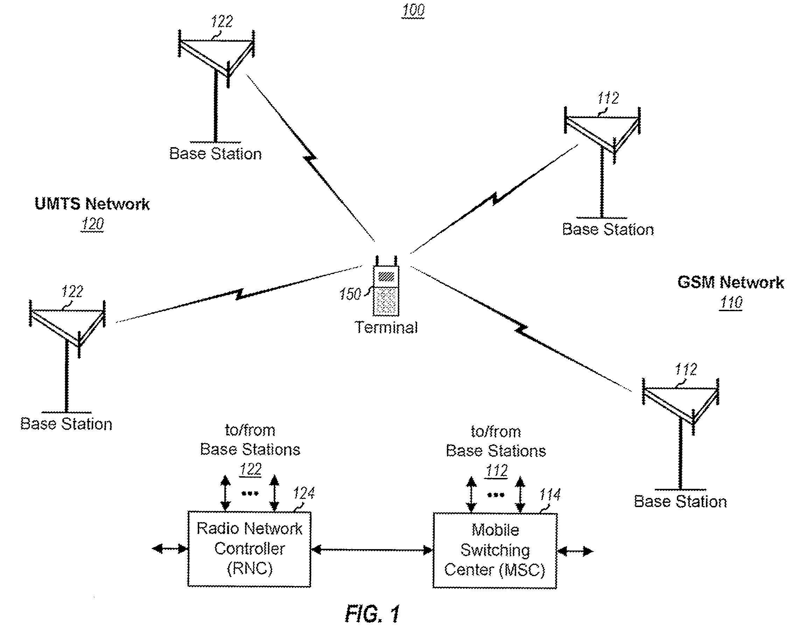

**FIG. 1** shows a public land mobile network (PLMN) 100 that includes a GSM network 110 and a UMTS network 120. The terms "network" and "system" are often used interchangeably. UMTS network 120 implements W-CDMA and is also called a UMTS Terrestrial Radio Access Network (UTRAN). The term "UMTS" and "W-CDMA" are used interchangeably in the description below. GSM network 110 and UMTS network 120 are two wireless networks employing different radio technologies (GSM and W-CDMA) but belonging to the same service provider or network operator.

GSM network 110 includes base stations 112 that communicate with terminals within the coverage area of the GSM network. A base station is a fixed station that communicates with the terminals and may also be called a Node B, a base transceiver station (BTS), an access point, and so on. A mobile switching center (MSC) 114 couples to base stations 112 and provides coordination and control for these base stations. UMTS network 120 includes base stations 122 that communicate with terminals within the coverage area of the UMTS network. A radio network controller (RNC) 124 couples to base stations 122 and provides coordination and control for these base stations. RNC 124 communicates with MSC 114 to support inter-working between the GSM and UMTS networks.

A terminal 150 is capable of communicating with GSM network 110 and UMTS network 120, typically with one wireless network at any given moment. This capability allows a user to obtain the performance advantages of UMTS and the coverage benefits of GSM with the same terminal. Terminal 150 may be fixed or mobile and may also be called a user equipment (UE), a mobile station (MS), a mobile equipment (ME), and so on. Terminal 150 may be a cellular phone, a personal digital assistant (PDA), a wireless modem, a wireless communication device, a handheld device, a subscriber unit, and so on.

Terminal 150 may be designed to operate on one or more frequency bands commonly used for wireless communication. Table 1 lists the frequency bands that are commonly used for UMTS and GSM as well as the uplink/transmit frequency range and the downlink/receive frequency range for each band.

**Table 1**

| **GSM Frequency Band** | **UMTS Frequency Band** | **Uplink/ Transmit (MHz)** | **Downlink/ Receive** (MHz) | **Common Name** |
|---|---|---|---|---|
| | UMTS Band I | 1920 - 1980 | 2110 - 2170 | IMT-2000 |
| GSM 1900 | UMTS Band II | 1850 - 1910 | 1930 - 1990 | PCS |
| GSM 1800 | UMTS Band III | 1710 - 1785 | 1805 - 1880 | DCS |
| | UMTS Band IV | 1710 - 1755 | 2110 - 2155 | AWS |
| GSM 850 | UMTS Band V | 824 - 849 | 869 - 894 | Cellular |
| | UMTS Band VI | 830 - 840 | 875 - 885 | |
| | UMTS Band VII | 2500 - 2570 | 2620 - 2690 | |
| GSM 900 | UMTS Band VIII | 880 - 915 | 925 - 960 | EGSM |
| | UMTS Band IX | 1749.9 - 1784.9 | 1844.9 - 1879,9 | |

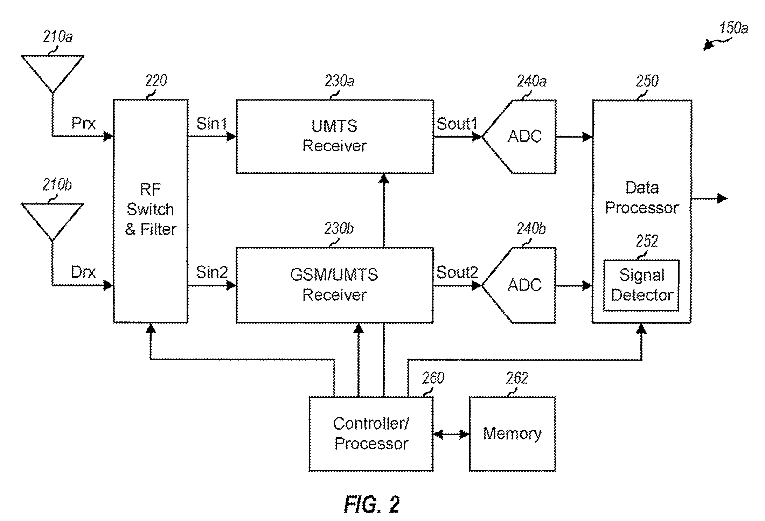

**FIG. 2** shows a block diagram of a terminal 150a capable of receiving GSM and UMTS, with receive diversity for UMTS. Terminal 150a is an embodiment of terminal 150 in FIG. 1. In this embodiment, terminal 150a includes two antennas 210a and 210b and two receivers 230a and 230b. The two antennas 210a and 210b may be formed in various manners. In an embodiment, antenna 210a is a dipole antenna (e.g., a pull-out antenna often used for a cellular phone), has better performance (e.g., higher antenna gain), and is designated as a primary antenna. In an embodiment, antenna 210b is a patch antenna formed with printed traces on a circuit board, has worse performance (e.g., lower antenna gain), and is designated as a diversity or secondary antenna. In other embodiments, antennas 210a and 210b may be formed in other manners with wire conductors, printed traces, and so on, as is known in the art.

Antenna 210a receives RF modulated signals transmitted by base stations in the GSM and UMTS networks and provides a primary received signal (Prx) that includes versions of the transmitted RF modulated signals. Similarly, antenna 210b receives the RF modulated signals and provides a diversity received signal (Drx) that includes different versions of the transmitted RF modulated signals. A switch and filler unit 220 receives the Prx and Drx signals, filters each received signal to remove out-of-band components, provides one received signal as a first RF input signal (Sin1) to receiver 230a, and provides the other received signal as a second RF input signal (Sin2) to receiver 230b. Several designs of switch and filter unit 220 are described below.

In the embodiment shown in FIG. 2, receiver 230a is a primary receiver for UMTS and is designed to provide good performance for UMTS. Receiver 230b is a primary receiver for GSM and is designed to provide good performance for GSM. Each receiver 230 may be designed to meet applicable requirements for its designated system and may be used for that system in all operating conditions, e.g., over a specified range of received signal levels. The system requirements may certain to linearity, dynamic range, sensitivity, out-of-band rejection, and so on. Receiver 230b is also a secondary receiver for UMTS but may not be spec-compliant for UMTS. Several designs of receivers 230a and 230b are described below. In the following description, "GSM/UMTS" means that GSM is primary (e.g., spec-compliant) and UMTS is secondary (e.g., supported but non spec-compliant). Similarly, "UMTS/GSM" means that UMTS is primary and GSM is secondary. As used herein, "spec-compliant" means compliant with applicable system requirements, and "non-spec compliant" means not fully compliant with all of the applicable system requirements.

Receiver 230a processes the Sin 1 signal and provides a first output baseband signal (Sout1) to an analog-to-digital converter (ADC) 240a. Similarly, receiver 230b processes the Sin2 signal and provides a second output baseband signal (Sout2) to an ADC 240b. ADC 240a digitizes the Sout1 signal and provides a first stream of data samples to a data processor 250 for further processing. ADC 240b digitizes the Sout2 signal and provides a second stream of data samples to data processor 250. Although not shown in FIG. 2 for simplicity, each output baseband signal and each data sample stream may be a complex signal/stream having an inphase (I) component and a quadrature (Q) component.

In the embodiment shown in FIG. 2, a signal detector 252 measures the level of a desired signal, which is a signal within an RF channel of interest. The desired signal detection may be performed in various manners known in the art. For example, an automatic gain control (AGC) loop is typically used to adjust the gains of variable gain amplifiers (VGAs) within the receivers so that output baseband signals at the proper amplitude are provided to the ADCs. The gain control Signals for these VGAs are indicative of, and may be mapped to, the desired signal level. Although not shown in FIG. 2, a jammer detector may detect for the presence of jammers, which are large amplitude undesired signals near the desired signal. The jammer detector may provide a status signal indicating whether or not jammers are present. The outputs from the signal detector and the jammer detector may be used to control the operation of receivers 230a and 230b.

A controller/processor 260 directs the operation of various units at terminal 150a. Controller/processor 260 may control the routing of the Prx and Drx signals to receivers 230a and 230b depending on which system is being received (e.g., UMTS or GSM). Controller/processor 260 may further control the operation of receivers 230a and 230b and data processor 250 for the system being received. A memory 262 stores program codes and data for terminal 150a.

To receive UMTS with diversity, primary antenna 210a is coupled to UMTS receiver 230a, and diversity antenna 210b is coupled to GSM/UMTS receiver 230b. Both receivers 230a and 230b are operational and process the received signals from antennas 210a and 210b, respectively. To receive GSM without diversity, primary antenna 210a is coupled to GSM/UMTS receiver 230b, which processes the received signal from antenna 210a. UMTS receiver 230a may be powered down to conserve power.

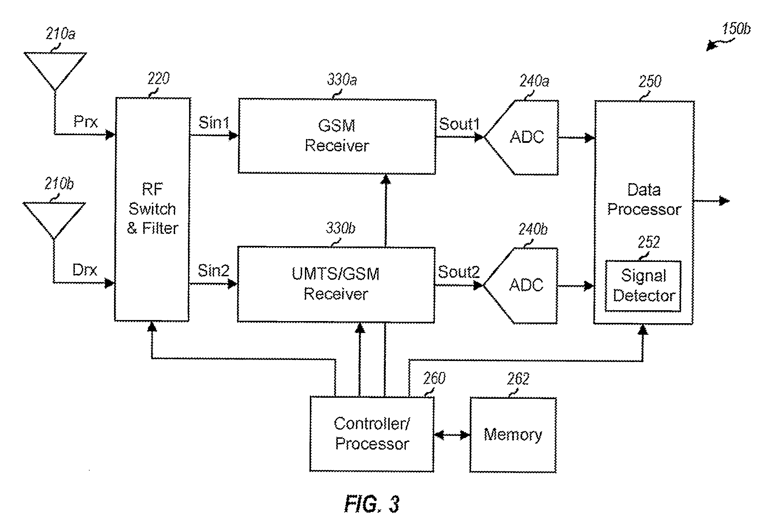

**FIG. 3** shows a block diagram of a terminal 150b capable of receiving GSM and UMTS, with receive diversity for GSM. Terminal 150b is another embodiment of terminal 150 in FIG. 1. In this embodiment, terminal 150b includes all of the units in terminal 150a in FIG. 2 except that receivers 230a and 230b are replaced with receivers 330a and 330b, respectively. Receiver 330a is a primary receiver for GSM and may be designed to be spec-compliant for GSM. Receiver 330b is a primary receiver for UMTS and may be designed to be spec-compliant four UMTS. Receiver 330b is also a secondary receiver for GSM and may or may not be spec-compliant for GSM. Several designs of receivers 330a and 330b are described below.

To receive GSM with diversity, primary antenna 210a is coupled to GSM receiver 330a, and diversity antenna 210b is coupled to UMTS/GSM receiver 330b. Both receivers 330a and 330b are operational and process the received signals from antennas 210a and 210b, respectively. To receive UMTS without diversity, primary antenna 210a is coupled to UMTS/GSM receiver 330b, which processes the received signal from antenna 210a. GSM receiver 330a may be powered down to conserve power.

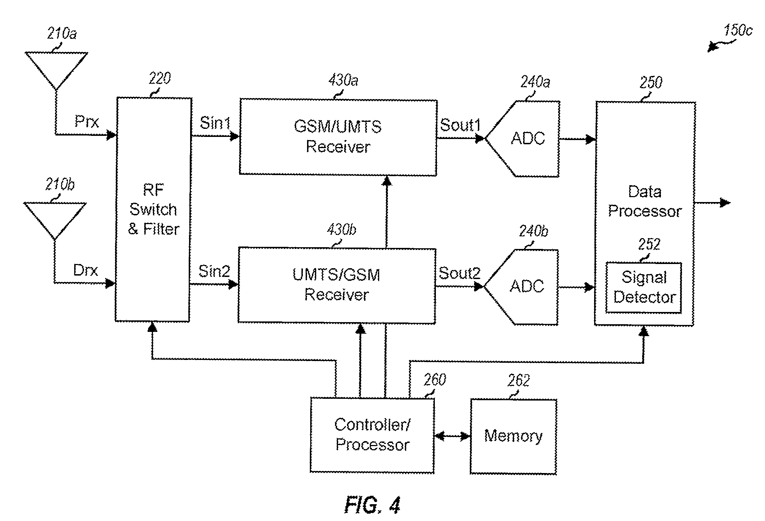

**FIG. 4** shows a block diagram of a terminal 150c capable of receiving GSM and UMTS, with receive diversity for both GSM and UMTS. Terminal 150c is yet another embodiment of terminal 150 in FIG. 1. In this embodiment, terminal 150c includes all of the units in terminal 150a in FIG. 2 except that receivers 230a and 230b are replaced with receivers 430a and 430b, respectively. Receiver 430a is a primary receiver for GSM and may be designed to be spec-compliant for GSM. Receiver 430b is a primary receiver for UMTS and may be designed to be spec-compliant for UMTS. Receiver 430a is also a secondary receiver for UMTS and may or may not be spec-compliant for UMTS. Receiver 430b is also a secondary receiver for GSM and may or may not be spec-compliant for GSM. Several designs of receivers 430a and 430b are described below.

To receive GSM with diversity, primary antenna 210a is coupled to GSM/UMTS receiver 430a, and diversity antenna 210b is coupled to UMTS/GSM receiver 430b. Both receivers 430a and 430b are operational and process the received signals from antennas 210a and 210b, respectively. To receive UMTS with diversity, primary antenna 210a is coupled to UMTS/GSM receiver 430b, and diversity antenna 210b is coupled to GSM/UMTS receiver 430a. Both receivers 430a and 430b are operational and process the received signals from antennas 210b and 210a, respectively.

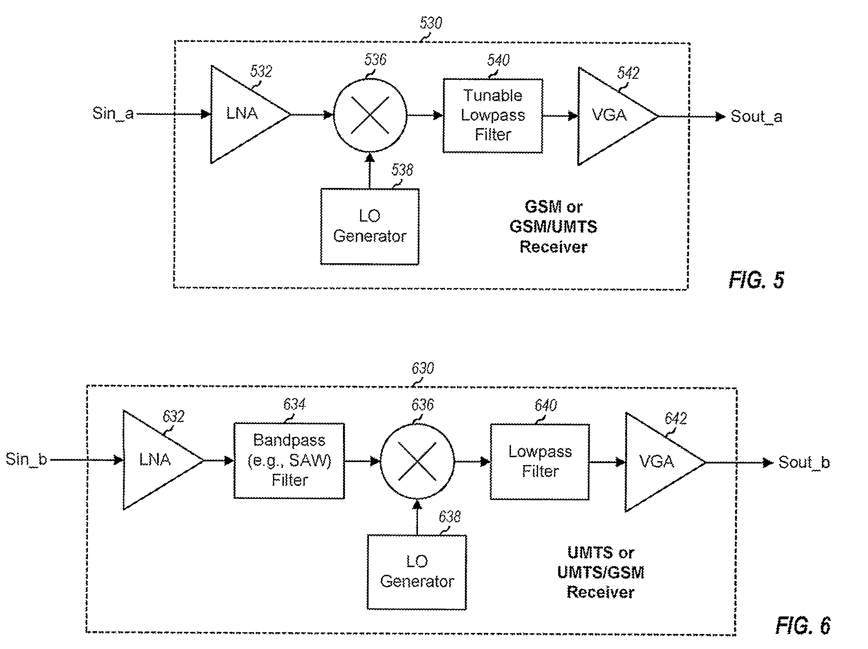

**FIG. 5** shows a block diagram of an embodiment of a receiver 530. Receiver 530 may used as the primary receiver for GSM and may also be designed to receive UMTS. Receiver 530 may be used for GSM/UMTS receiver 230b in FIG. 2, GSM receiver 330a in FIG. 3, and GSM/UMTS receiver 430a in FIG. 4.

Within receiver 530, a low noise amplifier (LNA) 532 receives and amplifies an RF input signal (Sin_a) with a fixed or variable gain and provides an amplified signal. The Sin_a signal may be the Sin1 or Sin2 signal in FIGS. 2 through 4. A downconverter 536 frequency downconverts the amplified signal with a local oscillator (LO) signal from an LO generator 538 and provides a downconverted signal. The frequency of the LO signal is selected such that the signal component in an RF channel of interest is downconverted to baseband or near-baseband. For GSM, a frequency band covers many RF channels, and each RF channel has a bandwidth of 200 KHz. For UMTS, a frequency band also covers many RF channels. Each RF channel has a bandwidth of 3.84 MHz, but the spacing between RF channels is 5 MHz.

A lowpass filter (LPF) 540 filters the downconverted signal to pass the signal components in the RF channel of interest and to remove noise and undesired signals that may be generated by the downconversion process. Lowpass filter 540 may be designed with a relatively sharp roll-off in order to attenuate jammers. These jammers may take up a large portion of the dynamic range of the subsequent ADC if they are not sufficiently attenuated. Lowpass filter 540 may be implemented with various filter types (e.g., Butterworth, elliptical, Chebychev, and so on), with the proper filter order and bandwidth, and with sufficient bias current to meet linearity and dynamic range requirements. Lowpass filter 540 provides a filtered baseband signal. A VGA 542 amplifies and buffers the filtered baseband signal and provides an output baseband signal (Sout_a), which may be the Sout1 or Sout2 signal in FIGS. 2 through 4.

In an embodiment, receiver 530 is used to receive only GSM. In this embodiment, the circuit blocks in receiver 530 may be designed specifically for GSM. Lowpass filter 540 may have a fixed bandwidth for one GSM RF channel. LO generator 538 may provide the LO signal at any one of the supported GSM RF channels. The circuit blocks may be designed to provide the required linearity and dynamic range for GSM.

In another embodiment, receiver 530 is used to receive both GSM and UMTS. In this embodiment, the circuit blocks in receiver 530 may be designed to be spec-compliant for GSM and still be able to receive UMTS. Lowpass filter 540 may be a tunable filter having an adjustable bandwidth of 100 KHz for one GSM RF channel when receiving GSM or 1.92 MHz for one UMTS RF channel when receiving UMTS, The filter bandwidth is half of the RF channel bandwidth. LO generator 538 may provide the LO signal at any one of the supported GSM and UMTS RF channels.

**FIG. 6** shows a block diagram of an embodiment of a receiver 630. Receiver 630 may be used as the primary receiver for UMTS and may also be designed to receive GSM. Receiver 630 may be used for UMTS receiver 230a in FIG. 2, UMTS/GSM receiver 330b in FIG. 3, and UMTS/GSM receiver 430b in FIG. 4.

Within receiver 630, an LNA 632 receives and amplifies an RF input signal (Sin_b) with a fixed or variable gain and provides an amplified signal. The Sin_b signal may be the Sin1 or Sin2 signal in FIGS. 2 through 4.

A Bandpass filter (BPF) 634 filters the amplified signal to pass signal components in the band of interest and to remove out-of-band noise and undesired signals. UMTS is a full-duplex system in which signals may be transmitted and received simultaneously on two frequency ranges, as shown in Table 1. A terminal may thus transmit an RF modulated signal on the uplink and concurrently receive an RF input signal on the downlink. The RF modulated signal transmitted by the terminal is typically much larger in amplitude than the received RF input signal. Bandpass filter 634 may pass the RF components for an entire receive frequency range (e.g., from 869 to 894 MHz for the cellular band) and may suppress the RF components for a transmit frequency range (e.g., from 824 to 849 MHz for the cellular band). Bandpass filter 634 may have a passband that corresponds to the entire receive frequency range in the band of interest. Because of the potentially large difference in the transmit and receive signal levels, bandpass filter 634 provides a large amount of out-of-band rejection in order to meet system requirements. Bandpass filter 634 may be implemented with a surface acoustic wave (SAW) filter, which has a sharp roll-off and is commonly used for applications requiring large attenuation of out-of-band signals. Bandpass filter 634 may also be implemented with a ceramic filter or some other type of filter. Bandpass filter 634 may also be omitted.

Downconverter 636, LO generator 638, lowpass filter 640, and VGA 642 may process the filtered signal from bandpass filter 634 in the manner described above for FIG. 5. VGA 642 provides an output baseband signal (Sout_b), which may be the Sout1 or Sout2 signal in FIGS. 2 through 4.

In an embodiment, receiver 630 is used to receive only UMTS. In this embodiment, the circuit blocks in receiver 630 may be designed specifically for UMTS. Lowpass filter 640 may have a fixed bandwidth for one UMTS RF channel. In another embodiment, receiver 630 is used to receive both UMTS and GSM. In this embodiment, the circuit blocks in receiver 630 may be designed to be spec-compliant for UMTS and still be able to receive GSM. Lowpass filter 640 may be a tunable filter having an adjustable bandwidth for one UMTS RF channel when receiving UMTS and one GSM RF channel when receiving GSM.

FIGS. 5 and 6 show specific designs for two receiver designs. In general, a receiver may implement a super-heterodyne architecture or a direct-ta-baseband architecture. In the super-heterodyne architecture, the RF input signal is frequency downconverted in multiple stages, e.g., from RF to an intermediate frequency (IF) in one stage, and then from IF to baseband in another stage. In the direct-to-baseband architecture, which is shown in FIGS. 5 and 6, the RF input signal is frequency downconverted from RF directly to baseband in one stage. The super-heterodyne and direct-to-baseband architectures may use different circuit blocks and/or have different circuit requirements.

In general, a receiver may perform signal conditioning with one or more stages of amplifier, filter, mixer, and so on. A receiver may include different and/or additional circuit blocks not shown in FIGS. 5 and 6. For example, additional amplifiers may be inserted prior to downconverters 536 and 636. Furthermore, the circuit blocks may be arranged differently from the arrangement shown in FIGS. 5 and 6. For example, lowpass filters 540 and 640 may be swapped with VGAs 542 and 642, respectively.

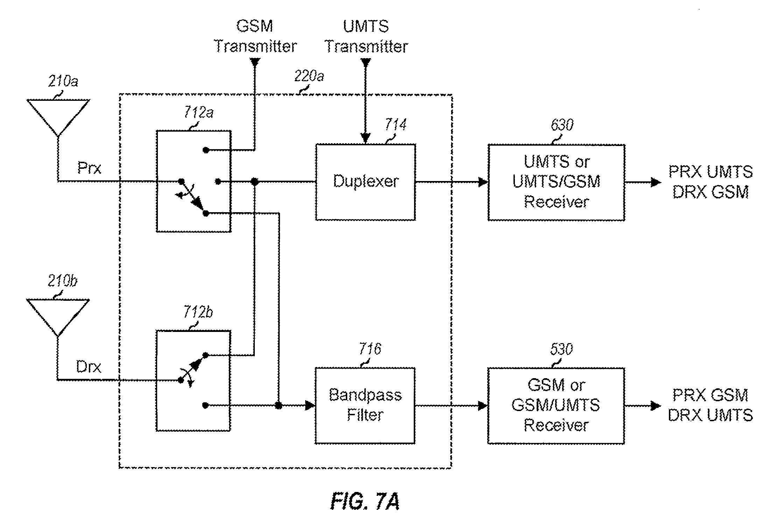

**FIG. 7A** shows a block diagram of a switch and filter unit 220a, which is an embodiment of unit 220 in FIGS. 2 through 4. Within unit 220a, an RF switch 712a has its input coupled to primary antenna 210a, a first output coupled to a GSM transmitter, a second output coupled to a duplexer 714, and a third output coupled to a bandpass filter 716. An RF switch 712b has its input coupled to diversity antenna 210b, a first output coupled to duplexer 714, and a second output coupled to bandpass filter 716. Duplexer 714 has another input coupled to a UMTS transmitter and an output coupled to receiver 630. Bandpass filters 716 filters a received RF signal from RF switch 712a or 712b to pass signal components in the band of interest and provides an RF input signal to receiver 530. Bandpass filter 716 may pass an entire receive frequency range for a band of interest and may have a bandwidth of 10 to 75 MHz depending on the frequency band, as shown in Table 1. Bandpass filter 716 may be implemented with a SAW filter, a ceramic filter, or some other type of filter.

UMTS is a full-duplex system in which signals are simultaneously transmitted and received on different frequency ranges. To transmit/receive UMTS, RF switch 712a couples primary antenna 210a to duplexer 714. Duplexer 71.4 routes an RF modulated signal from the UMTS transmitter to primary antenna 210a and further routes a received RF signal from the primary antenna to UMTS receiver 630. Duplexer 714 also performs filtering of the received RF signal. RF switch 712b couples diversity antenna 210b to bandpass filter 716. Receiver 630 processes the Prx signal from primary antenna 210a and provides a primary output baseband signal for UMTS (PRX UMTS). Receiver 530 processes the Drx signal from diversity antenna 210b and provides a diversity output baseband signal for UMTS (DRX UMTS).

GSM is a half-duplex system in which signals are transmitted and received in different time intervals. To transmit/receive GSM, RF switch 712a couples primary antenna 210a between the GSM transmitter and bandpass filter 716 for GSM receiver 530 at appropriate times. RF switch 712b couples diversity antenna 210b to duplexer 714. Receiver 530 processes the Prx signal from primary antenna 210a and provides a primary output baseband signal for GSM (PRX GSM). Receiver 630 processes the Drx signal from diversity antenna 210b and provides a diversity output baseband signal for GSM (DRX GSM).

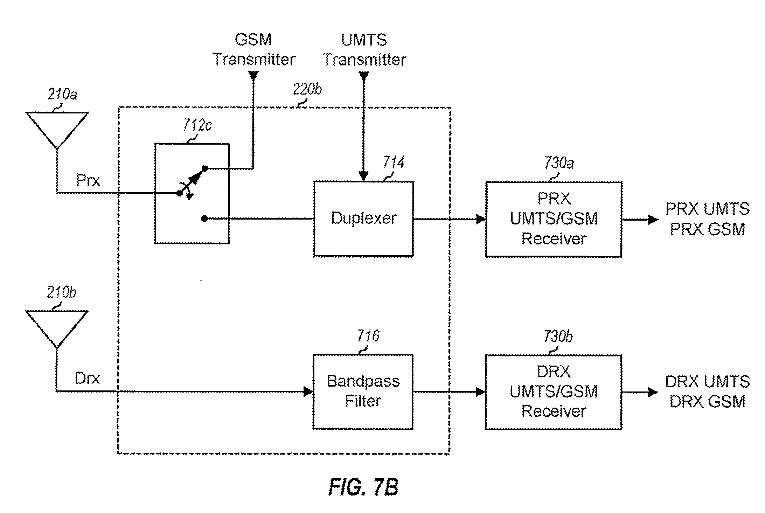

**FIG. 7B** shows a block diagram of a switch and filter unit 220b, which is another embodiment of unit 220 in FIGS. 2 through 4. Within unit 220b, an RF switch 712c has its input coupled to primary antenna 210a, a first output coupled to a GSM transmitter, and a second output coupled to duplexer 714. Diversity antenna 210b is coupled directly to bandpass filter 716.

To transmit/receive UMTS, RF switch 712c couples primary antenna 210a to duplexer 714, which couples the UMTS transmitter and a primary receiver 730a to the primary antenna. Receiver 730a processes the Prx signal from primary antenna 210a and provides PRX UMTS. A receiver 730b processes the Drx signals from diversity, antenna 210b and provides DRX UMTS. To transmit/receive GSM, RF switch 712c couples primary antenna 210a between the GSM transmitter and duplexer 714 at appropriate times. Receiver 730a processes the Prx signal and provides PRX GSM. Receiver 730b processes the Drx signal and provides DRX GSM.

In the embodiments shown in FIGS. 7A and 7B, duplexer 714 passes the received RF signal for both UMTS and GSM, and bandpass filter 716 also passes the received RF signal for both UMTS and GSM. In the embodiment shown in FIG. 7A, receiver 630 is the primary receiver for UMTS and the diversity receiver for GSM, and receiver 530 is the primary receiver for GSM and the diversity receiver for UMTS. Receiver 630 may be spec-compliant for UMTS, and receiver 530 may be spec-compliant for GSM. In the embodiment shown in FIG. 7B, receiver 730a is the primary receiver for both UMTS and GSM, and receiver 730b is the diversity receiver for both UMTS and GSM. Receiver 730a may be spec-compliant for both UMTS and GSM.

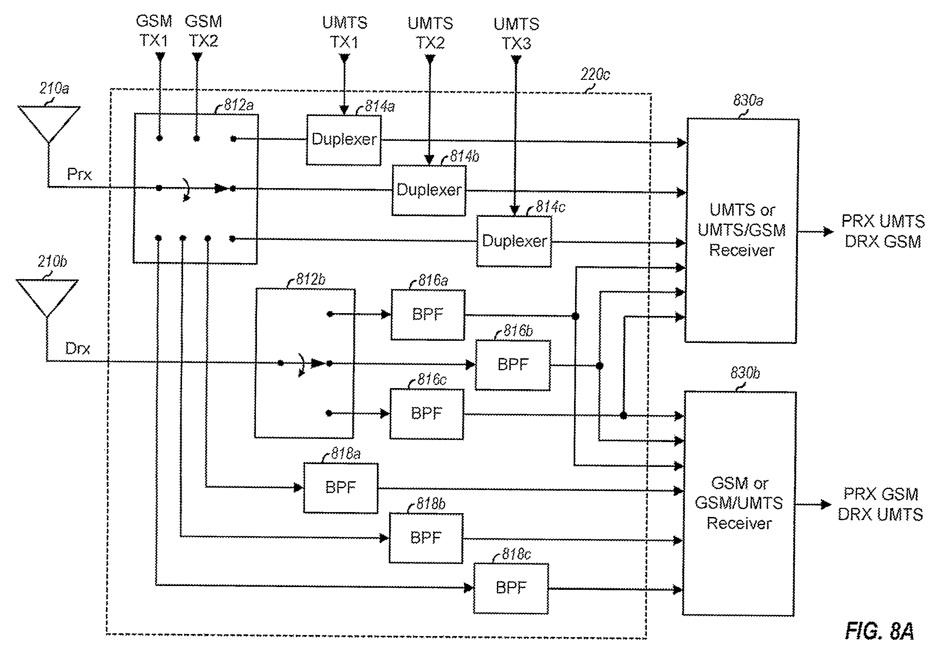

**FIG. 8A** shows a block diagram of a switch and filter unit 220c, which is yet another embodiment of unit 220 in FIGS. 2 through 4. Unit 220c supports operation on three frequency bands, which may be any of the ones listed in Table 1 and/or other frequency bands. Within unit 220c, an RF switch 812a has its input coupled to primary antenna 210a, two outputs coupled to two GSM transmitters for two frequency bands, another three outputs coupled to duplexers 814a, 814b and 814c for three frequency bands, and yet another three outputs coupled to bandpass filters (BPFs) 818a, 818b and 818c for three frequency bands. An RF switch 812b has its input coupled to diversity antenna 210b and three outputs coupled to bandpass filters 816a, 816b and 816c for three frequency bands.

To transmit/receive UMTS on a given desired frequency band, RF switch 812a couples primary antenna 210a to a duplexer 814 for the desired frequency band, which couples a UMTS transmitter and a receiver 830a to the primary antenna. RF switch 812b couples diversity antenna 210b to a bandpass filter 816 for the desired frequency band, which further couples to a receiver 830b. Receiver 830a processes the Prx signal from primary antenna 210a and provides PRX UMTS. Receiver 830b processes the Drx signal from diversity antenna 210b and provides DRX UMTS.

To transmit/receive GSM on a given desired frequency band, RF switch 812a couples primary antenna 210a between a GSM transmitter and a bandpass filter 818 for the desired frequency band. RF switch 812b couples diversity antenna 210b to a bandpass filter 816 for the desired frequency band. Receiver 830b processes the Prx signal from primary antenna 210a and provides PRX GSM. Receiver 830a processes the Drx signal from diversity antenna 210b and provides DRX GSM.

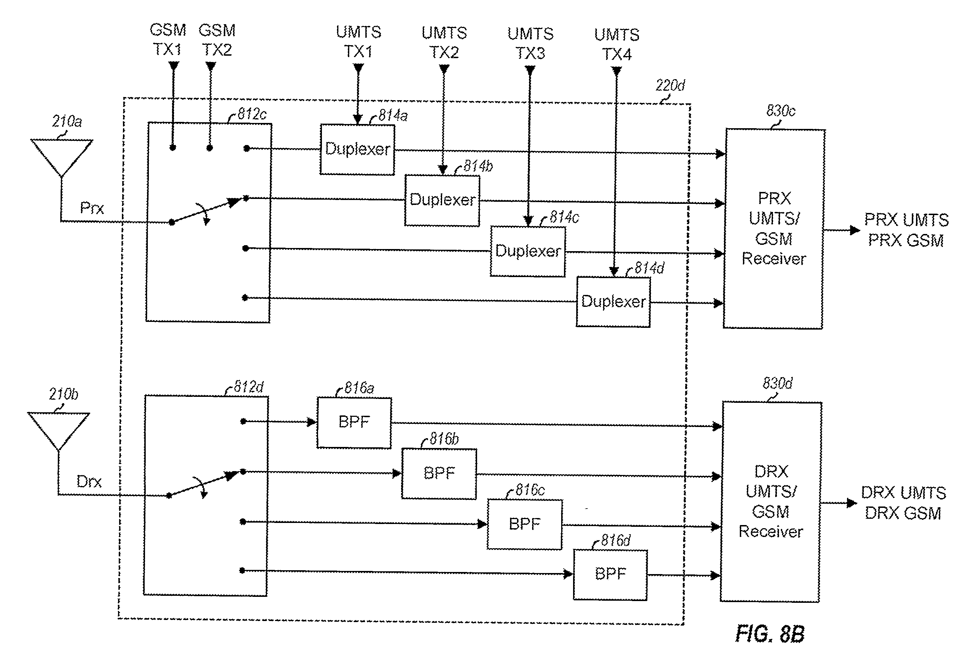

**FIG. 8B** shows a block diagram of a switch and filter unit 220d, which is yet another embodiment of unit 220 in FIGS. 2 through 4. Unit 220d supports operation on four frequency bands, which may be any of the ones listed in Table 1 and/or other frequency bands. Within unit 220d, an RF switch 812c has its input coupled to primary antenna 210a, two outputs coupled to two GSM transmitters for two frequency bands, and another four outputs coupled to duplexers 814a, 814b, 814c and 814d for four frequency bands. An RF switch 812d has its input coupled to diversity antenna 210b and four outputs coupled to bandpass filters 816a, 816b, 816c and 816d for four frequency bands.

To transmit/receive UMTS on a given desired frequency band, RF switch 812c couples primary antenna 210a to a duplexer 814 for the desired frequency band, which couples a UMTS transmitter and a receiver 830c to the primary antenna. RF switch 812d couples diversity antenna 210b to a bandpass filter 816 for the desired frequency band, which further couples to a receiver 830d. Receiver 830c processes the Prx signal from primary antenna 210a and provides PRX UMTS. Receiver 830d processes the Drx signal from diversity antenna 210b and provides DRX UMTS.

To transmit/receive GSM on a given desired frequency band, RF switch 812c couples primary antenna 210a between a GSM transmitter and a duplexer 814 for the desired frequency band. RF switch 812d couples diversity antenna 210b to a bandpass filter 816 for the desired frequency band. Receiver 830c processes the Prx signal from primary antenna 210a and provides PRX GSM. Receiver 830d processes the Drx signal from diversity antenna 210b and provides DRX GSM.

In the embodiment shown in FIG. 8A, duplexers 814a through 814c pass the received RF signal for UMTS, bandpass filters 818a through 818c pass the received RF signal for GSM, and bandpass filters 816a through 816c pass the received RF signal for both UMTS and GSM. Receiver 830a is the primary receiver for UMTS and the diversity receiver for GSM, and receiver 830b is the primary receiver for GSM and the diversity receiver for UMTS. Receiver 830a may be spec-compliant for UMTS, and receiver 830b may be spec-compliant for GSM. In the embodiment shown in FIG. 8B, duplexers 814a through 814d pass the received RF signal for both UMTS and (GSM, and bandpass filters 816a through 816d also pass the received RF signal for both UMTS and GSM. Receiver 830c is the primary receiver for both UMTS and GSM, and receiver 830d is the diversity receiver for both UMTS and GSM. Receiver 830c may be spec-compliant for both UMTS and GSM.

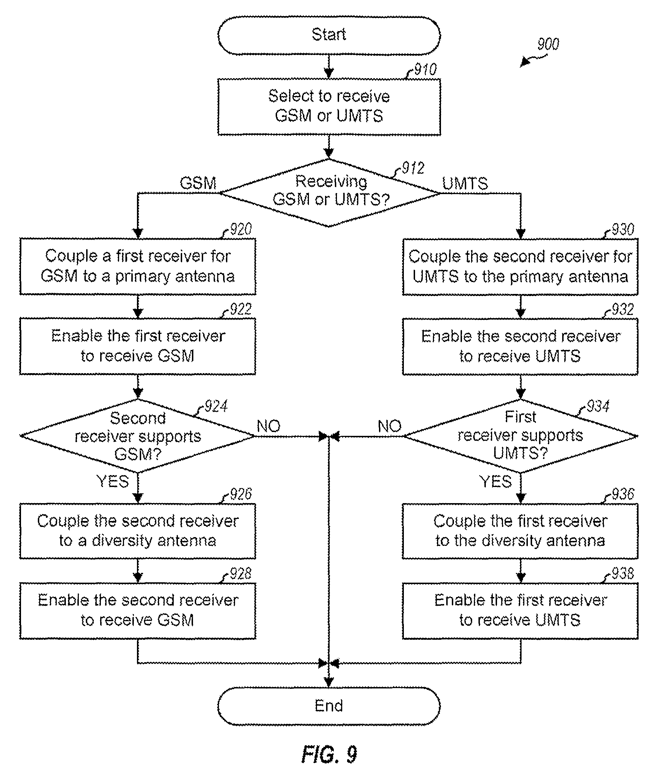

**FIG. 9** shows an embodiment of a process 900 performed by a terminal to receive GSM and UMTS. The terminal has a first receiver for GSM and a second receiver for UMTS. The first receiver may or may not support UMTS, and the second receiver may or may not support GSM. The terminal supports receive diversity for GSM and/or UMTS.

The terminal selects to receive either GSM or UMTS (block 910). If GSM is selected, as determined in block 912, then the first receiver for GSM is coupled to the primary antenna (block 920) and is enabled to receive GSM (block 922). If the second receiver also supported GSM (e.g., in the embodiments shown in FIGS. 3 and 4), as determined in block 924, then the second receiver is coupled to the diversity antenna (block 926) and is enabled to receive GSM (block 928).

If UMTS is selected, as determined in block 912, then the second receiver for UMTS is coupled to the primary antenna (block 930) and is enabled to receive UMTS (block 932). If the first receiver also supported UMTS (e.g., in the embodiments shown in FIGS. 2 and 4), as determined in block 934, then the first receiver is coupled to the diversity antenna (block 936) and is enabled to receive UMTS (block 938).

The primary receiver for each system is typically designed to be spec-compliant. This often entails biasing the circuit blocks in the receiver with sufficient bias current in order to meet linearity and dynamic range requirements for the worst-case operating conditions, which typically correspond to low desired signal level and large jammer level. However, the worst-case conditions are often not encountered and, in such instances, the primary receiver may be operated with lower bias current in order to reduce power consumption. One or more detectors may be used to ascertain the operating conditions, e.g., to detect for the desired signal level and/or the jammer level. The bias current for the receiver may be adjusted based on the detected operating conditions.

When operating two receivers simultaneously for receive diversity, the secondary receiver may be operated with lower bias current to reduce power consumption. Receive diversity generally relies on the primary and diversity antennas being somewhat uncorrelated, so that when one antenna is in deep fade the other antenna is not also in deep fade. Hence, when the primary antenna is in deep fade, the diversity antenna is typically not in deep fade, and the secondary receiver is processing a received signal that is not weak and may then be operated at lower bias current.

Receive diversity may also be enabled or disabled based on the detected operating conditions for the primary receiver. For example, receive diversity may be enabled whenever the desired signal level for the primary receiver is detected to be low and may be disabled otherwise.

For clarity, the diversity receiver has been specifically described for GSM and UMTS. The diversity receiver may also be used for other systems. The diversity receiver may be designed with (1) a first receiver to receive one or more TDMA systems and possibly one or more CDMA systems and (2) a second receiver to receive the one or more CDMA systems and possibly the one or more CDMA systems. The TDMA system(s) may include GSM and/or other TDMA systems. The CDMA systems) may include W-CDMA, cdma2000, and/or other CDMA systems. For example, the diversity receiver may support a combination of GSM and 1x. a combination of UMTS and 1x, a combination of GSM, UMTS and 1x, and so on. Lowpass filter 540 in FIG. 5 and Lowpass filter 640 in FIG. 6 may be designed with adjustable bandwidth of 100 KHz for one GSM RF channel, 1.92 MHz for one W-CDMA RF channel, and/or 610 KHz for one 1x RF channel.

All or a large portion of the diversity receiver may be implemented on one or more RF integrated circuits (RFICs). For example, the switch and filter section and the receivers, except the SAW filters, may be implemented on one or more RF1Cs. The diversity receiver may also be fabricated with various 1C process technologies such as complementary metal oxide semiconductor (CMOS), bipolar junction transistor (BJT), bipolar-CMOS (BiCMOS), silicon germanium (SiGe), gallium arsenide (GaAs), and so on. The diversity receiver may also be implemented with discrete circuit components.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. An apparatus (150a) comprising:
a first receiver (230a) for Universal Mobile Telecommunications System, UMTS; and
a second receiver (230b) for Global System for Mobile Communications, GSM, and UMTS, wherein the second receiver (230b) comprises a lowpass filter (540) having a bandwidth that is adjustable for GSM and UMTS;
further comprising
at least one detector (252) configured to determine operation conditions for the apparatus (150a), the detector (252) being a jammer detector being configured to detect the presence of jammers, which are large amplitude undesired signals near a detected signal; and
a controller (260) configured to control operation of the first and second receivers (230a, 230b) based on the determined operation conditions.

2. The apparatus (150a) of claim 1, wherein the first receiver (230a) comprises a bandpass filter (634) to attenuate a transmit frequency range for UMTS.

3. The apparatus (150a) of claim 2, wherein the lowpass filter (540) is set to a bandwidth of 100 KHz for GSM and to a bandwidth of 1.92 MHz for UMTS.

4. The apparatus (150a) of claim 1, wherein the second receiver (230b) comprises a downconverter (636) used for both GSM and UMTS.

5. The apparatus (150a) of claim 1, wherein the second receiver (230b) comprises a low noise amplifier, LNA, (632) used for both GSM and UMTS.

6. The apparatus (150a) of claim 1, wherein the second receiver (230b) comprises a variable gain amplifier, VGA, (642) used for both GSM and UMTS.

7. A method comprising:
selecting to receive Global System for Mobile Communications, GSM, or Universal Mobile Telecommunications System, UMTS;
if GSM is selected, enabling a first receiver to receive GSM and enabling a second receiver to receive GSM if supported by the second receiver; and
if UMTS is selected, enabling the second receiver to receive UMTS and enabling the first receiver to receive UMTS if supported by the first receiver, wherein the second receiver (230b) comprises a lowpass filter (540) having a bandwidth that is adjustable for GSM and UMTS;
further comprising
determining operation conditions for an apparatus using a jammer detector, the jammer detector being configured to detect the presence of jammers, which are large amplitude undesired signals near a detected signal; and
controlling operation of the first and second receivers based on the determined operation conditions.

## Patentansprüche

1. Eine Vorrichtung (150a), die Folgendes aufweist:
einen ersten Empfänger (230a) für UMTS (UMTS = Universal Mobile Telecommunications System); und
einen zweiten Empfänger (230b) für GSM (GSM = Global System for Mobile Communications) und UMTS; wobei der zweite Empfänger (230b) ein Tiefpassfilter (540) mit einer Bandbreite aufweist, die für GSM und UMTS einstellbar ist;
wobei die Vorrichtung weiter Folgendes aufweist:
wenigstens ein Detektionselement (252), das konfiguriert ist zum Bestimmen von Betriebsbedingungen für die Vorrichtung (150a), wobei das Detektionselement (252) ein Jammer- bzw. Störsender-Detektionselement ist, das konfiguriert ist zum Detektieren des Vorliegens von Störsendern bzw. Jammern, was unerwünschte Signale mit einer großen Amplitude in der Nähe eines detektierten Signals sind; und
eine Steuervorrichtung bzw. einen Controller (260), die bzw. der konfiguriert ist zum Steuern des Betriebs der ersten und zweiten Empfängers (230a, 230b) basierend auf den bestimmten Betriebsbedingungen.

2. Vorrichtung (150a) nach Anspruch 1, wobei der erste Empfänger (230a) ein Bandpassfilter (634) aufweist, um einen Sendefrequenzbereich für UMTS zu dämpfen.

3. Vorrichtung (150a) nach Anspruch 2, wobei das Tiefpassfilter (540) auf eine Bandbreite von 100 KHz für GSM und auf eine Bandbreite von 1,92 MHz für UMTS eingestellt ist.

4. Vorrichtung (150a) nach Anspruch 1, wobei der zweite Empfänger (230b) einen Abwärtswandler (636) aufweist, der für sowohl GSM als auch UMTS verwendet wird.

5. Vorrichtung (150a) nach Anspruch 1, wobei der zweite Empfänger (230b) einen Verstärker mit geringem Rauschen bzw. einen LNA (LNA = low noise amplifier) (632) aufweist, der für sowohl GSM als auch UMTS verwendet wird.

6. Vorrichtung (150a) nach Anspruch 1, wobei der zweite Empfänger (230b) einen Verstärker mit variabler Verstärkung bzw. einen VGA (VGA = variable gain amplifier) (642) aufweist, der für sowohl GSM als auch UMTS verwendet wird.

7. Ein Verfahren, das Folgendes aufweist:
Auswählen, GSM (GSM = Global System for Mobile Communications) oder UMTS (UMTS = Universal Mobile Telecommunications System) zu empfangen;
wenn GSM ausgewählt wird, Aktivieren eines ersten Empfängers, GSM zu empfangen, und Aktivieren eines zweiten Empfängers, GSM zu empfangen, wenn dies durch den zweiten Empfänger unterstützt wird; und
wenn UMTS ausgewählt wird, Aktivieren des zweiten Empfängers, UMTS zu empfangen, und Aktivieren des ersten Empfängers, UMTS zu empfangen, wenn dies durch den ersten Empfänger unterstützt wird, wobei der zweite Empfänger (230b) ein Tiefpassfilter (540) mit einer Bandbreite aufweist, die für GSM und UMTS einstellbar ist;
wobei das Verfahren weiter Folgendes aufweist:
Bestimmen von Betriebsbedingungen für eine Vorrichtung, die ein Jammer- bzw. Störsenderdetektionselement verwendet, wobei das Störsenderdetektionselement konfiguriert ist zum Detektieren des Vorliegens von Jammern bzw. Störsendern, die unerwünschte Signale mit großer Amplitude in der Nähe eines detektierten Signals sind; und
Steuern des Betriebs der ersten und zweiten Empfänger basierend auf den bestimmten Betriebsbedingungen.

## Revendications

1. Dispositif (150a) comprenant :
un premier récepteur (230a) pour le Système de Télécommunications Mobiles Universel, UMTS ; et
un deuxième récepteur (230b) pour le Système Global pour des Communications Mobiles, GSM, et UMTS, le deuxième récepteur (230b) comprenant un filtre passe-bas (540) ayant une largeur de bande qui est ajustable pour GSM et UMTS ;
comprenant en outre
au moins un détecteur (252) agencé pour déterminer des conditions de fonctionnement pour le dispositif (150a), le détecteur (252) étant un détecteur de brouilleurs qui est agencé pour détecter la présence de brouilleurs, qui sont des signaux non souhaités de grande amplitude proches d'un signal détecté ; et
un contrôleur (260) agencé pour contrôler le fonctionnement des premier et deuxième récepteurs (230a, 230b) sur la base des conditions de fonctionnement déterminées.

2. Dispositif (150a) selon la revendication 1, dans lequel le premier récepteur (230a) comprend un filtre passe-bande (634) pour atténuer une plage de fréquences d'émission pour UMTS.

3. Dispositif (150a) selon la revendication 2, dans lequel le filtre passe-bas (540) est réglé à une largeur de bande de 100 kHz pour GSM et à une largeur de bande de 1,92 MHz pour UMTS.

4. Dispositif (150a) selon la revendication 1, dans lequel le deuxième récepteur (230b) comprend un abaisseur de fréquence (636) utilisé à la fois pour GSM et pour UMTS.

5. Dispositif (150a) selon la revendication 1, dans lequel le deuxième récepteur (230b) comprend un amplificateur à faible bruit, LNA, (652) utilisé à la fois pour GSM et pour UMTS.

6. Dispositif (150a) selon la revendication 1, dans lequel le deuxième récepteur (230b) comprend un amplificateur à gain variable, VGA, (642) utilisé à la fois pour GSM et pour UMTS.

7. Procédé comprenant :
faire une sélection de façon à recevoir le Système Global pour des Communications Mobiles, GSM, ou le Système de Télécommunications Mobiles Universel, UMTS ;
si GSM est sélectionné, activer un premier récepteur pour recevoir GSM et activer un deuxième récepteur pour recevoir GSM s'il est supporté par le deuxième récepteur ; et
si UMTS est sélectionné, activer le deuxième récepteur pour recevoir UMTS et activer le premier récepteur pour recevoir UMTS s'il est supporté par le premier récepteur, le deuxième récepteur (230b) comprenant un filtre passe-bas (540) ayant une largeur de bande qui est ajustable pour GSM et pour UMTS ;
comprenant en outre
déterminer des conditions de fonctionnement pour un dispositif en utilisant un détecteur de brouilleurs, le détecteur de brouilleurs étantagencé pour détecter la présence de brouilleurs, qui sont des signaux non souhaités de grande amplitude proches d'un signal détecté ; et
contrôler le fonctionnement des premier et deuxième récepteurs sur la base des conditions de fonctionnement déterminées.
